# EUROPEAN PATENT APPLICATION

(11) **EP 4 848 606 A1**
(43) Date of publication of application: **02.12.2026**
(21) Application number: 25732297.4
(22) Date of filing: 14.01.2025
(51) Int. Cl.: H04B 7/06, H04W 72/566, H04W 72/231, H04W 24/10, H04L 5/00

(54) **METHOD PERFORMED BY TERMINAL OR BASE STATION IN WIRELESS COMMUNICATION SYSTEM, AND DEVICE THEREFOR**

(30) Priority: 23.01.2024 US 202463623814 P
(71) Applicant: LG ELECTRONICS, INC., Seoul 07336 (KR)
(72) Inventor: PARK, Haewook, Seoul 06772 (KR); KIM, Hyungtae, Seoul 06772 (KR); KANG, Jiwon, Seoul 06772 (KR); KIM, Seonwook, Seoul 06772 (KR)
(74) Representative: Mooser, Sebastian Thomas
(86) International application number: PCT/KR2025/000767
(87) International publication number: WO 2025/159426

(57) **Abstract**

**Abstract:** A method performed by a user equipment (UE) according to at least one of embodiments of the present disclosure includes receiving information about channel state information (CSI) reporting configuration via higher layer signaling, obtaining CSI based on a plurality of CSI-reference signal (CSI-RS) resources, and transmitting a CSI report related to a plurality of CSI-RS resource indicators (CRIs) based on the CSI, wherein the obtained CSI includes a plurality of part-2 CSIs related with the plurality of CRIs, and an alignment order of the plurality of part-2 CSIs within the CSI report is determined based on the plurality of CRIs.

## Description

### TECHNICAL FIELD

The present disclosure relates to a wireless communication system, and more specifically, to a method for transmitting or receiving an uplink/downlink wireless signal by a user equipment (UE) or a network in a wireless communication system and an apparatus therefor.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In NR Rel.15 to 18, up to 32-Tx port CSI-RS transmission is supported, and a CSI-RS resource indicator (CRI) is defined that indicates the CSI-RS used for a CSI report by a UE, and 1 CRI is related with 1 CSI report.

To increase system throughput in NR Rel-19, discussions have been underway to expand to up to 128 port CSI-RS.

### DISCLOSURE

### Technical Problem

An object of the present disclosure is to provide a method of efficiently performing a wireless signal transmission and reception process and a device therefor. For example, methods are provided for a CSI report to a plurality of CRIs.

In addition to the object described above, other objects may be inferred from the description below.

### Technical Solution

According to an aspect of the present disclosure, a method performed by a user equipment (UE) may include receiving information about channel state information (CSI) reporting configuration via higher layer signaling, obtaining CSI based on a plurality of CSI-reference signal (CSI-RS) resources, and transmitting a CSI report related to a plurality of CSI-RS resource indicators (CRIs) based on the CSI. The obtained CSI may include a plurality of part-2 CSIs associated with the plurality of CRIs. The alignment order of the plurality of part-2 CSIs within the CSI report may be determined based on the plurality of CRIs.

A part of the plurality of Part-2 CSIs may be omitted from the CSI report. The omission priority of each of the plurality of Part-2 CSIs may be determined based on the plurality of CRIs.

From among the plurality of CRIs, Part-2 CSI that is associated with CRI having the lowest priority may have the highest omission priority.

The plurality of part-2 CSIs may be related to a plurality of groups including a first group and a second group. The second group may have a higher omission priority than the first group.

Part-2 CSI that is associated with CRI having the highest priority from among the plurality of CRIs may be included in the CSI report.

A CSI report related to the plurality of CRIs may have the same priority as a CSI report including layer 1-reference signal received power (L1-RSRP) or layer 1-signal to interference plus noise ratio (L1-SINR).

A CSI report related to the plurality of CRIs may have a higher priority than the remaining CSI reports except for layer 1-reference signal received power (L1-RSRP) or layer 1-signal to interference plus noise ratio (L1-SINR).

The CSI report may be transmitted via a physical uplink shared channel (PUSCH).

According to another aspect of the present disclosure, a non-transitory computer-readable recording medium having recorded thereon a program for performing the method described above may be provided.

According to another aspect of the present disclosure, a device may include a memory configured to store instructions, and a processor configured to perform operations by executing the instructions, and the operations of the processor may comprise receiving information about channel state information (CSI) reporting configuration via higher layer signaling, obtaining CSI based on a plurality of CSI-reference signal (CSI-RS) resources, and transmitting a CSI report related to a plurality of CSI-RS resource indicators (CRIs) based on the CSI. The obtained CSI may include a plurality of part-2 CSIs associated with the plurality of CRIs. An alignment order of the plurality of part-2 CSIs within the CSI report may be determined based on the plurality of CRIs.

The device may further include a transceiver.

The device may be a user equipment (UE) in a wireless communication system.

The device may be a processing device configured to control a user equipment (UE) in a wireless communication system.

According to another aspect of the present disclosure, a method performed by a base station (BS) may include transmitting information about channel state information (CSI) reporting configuration to a user equipment (UE) via higher layer signaling, transmitting a CSI-reference signal (CSI-RS) based on a plurality of CSI-RS resources, and receiving a CSI report related to a plurality of CSI-RS resource indicators (CRIs) from the UE. The CSI report may include a plurality of part-2 CSIs associated with the plurality of CRIs. An alignment order of the plurality of part-2 CSIs within the CSI report may be determined based on the plurality of CRIs.

According to another aspect of the present disclosure, a non-transitory computer-readable recording medium having recorded thereon a program for performing the method described above may be provided.

According to another aspect of the present disclosure, a base station (BS) may include a memory configured to store instructions, and a processor configured to perform operations by executing the instructions, and the operations of the processor may comprise transmitting information about channel state information (CSI) reporting configuration to a user equipment (UE) via higher layer signaling, transmitting a CSI-reference signal (CSI-RS) based on a plurality of CSI-RS resources, and receiving a CSI report related to a plurality of CSI-RS resource indicators (CRIs) from the UE. The CSI report may include a plurality of part-2 CSIs associated with the plurality of CRIs. The alignment order of the plurality of part-2 CSIs within the CSI report may be determined based on the plurality of CRIs.

### Advantageous Effects

According to the present disclosure, wireless signal transmission and reception may be efficiently performed in a wireless communication system. For example, CSI reporting for a plurality of CRIs may be performed more efficiently, and ambiguity may be resolved when CSI omission is required by defining CRI-based priorities.

In addition to the effect described above, other effects may be inferred from the description below.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDSCH and acknowledgment/negative acknowledgment (ACK/NACK) transmission process.
FIG. 6 illustrates an exemplary PUSCH transmission process.
FIG. 7 illustrates an example of a channel state information (CSI) related procedure.
FIG. 8 illustrates an antenna configuration and a port configuration within a panel.
FIG. 9 is a diagram for explaining a structure of the enhanced Type II codebook.
FIG. 10 is a diagram for explaining a method of reporting CSI to a network by a UE according to an embodiment.
FIG. 11 illustrates a flowchart of a method performed by a UE according to an embodiment.
FIG. 12 illustrates a flowchart of a method performed by a BS according to an embodiment.
FIGS. 13 to 16 are diagrams illustrating an example of a communication system 1 and wireless devices applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

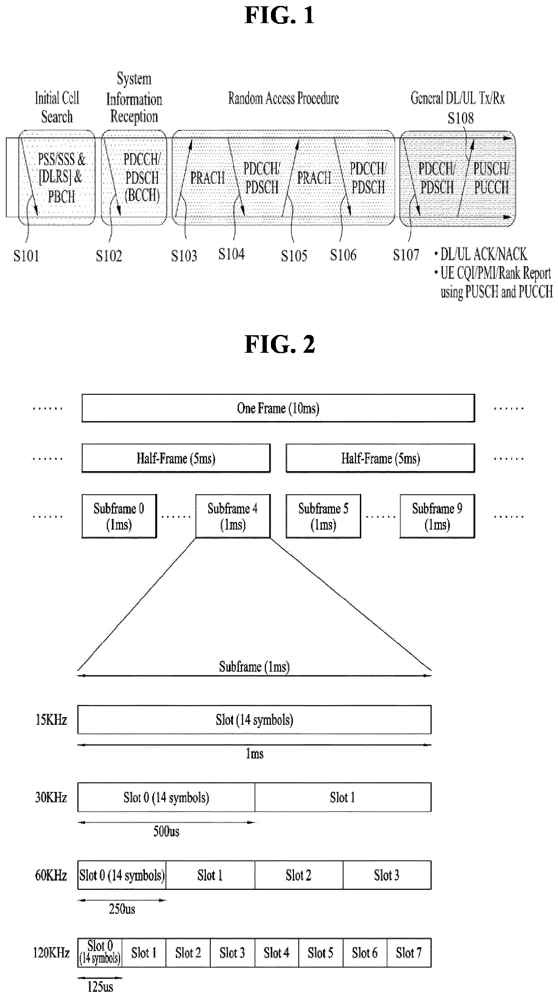

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| N ^{slot}_{symb}: Number of symbols in a slot N ^{frame,u}ₛₗₒₜ: Number of slots in a frame N ^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

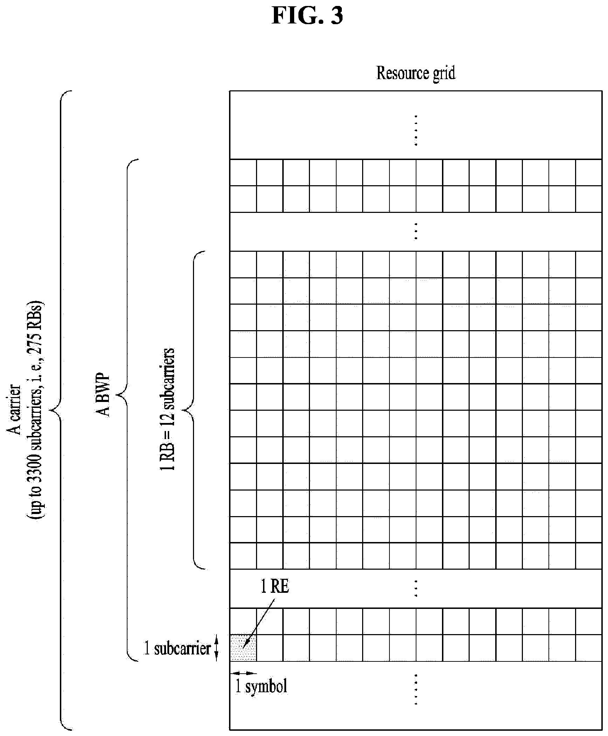

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

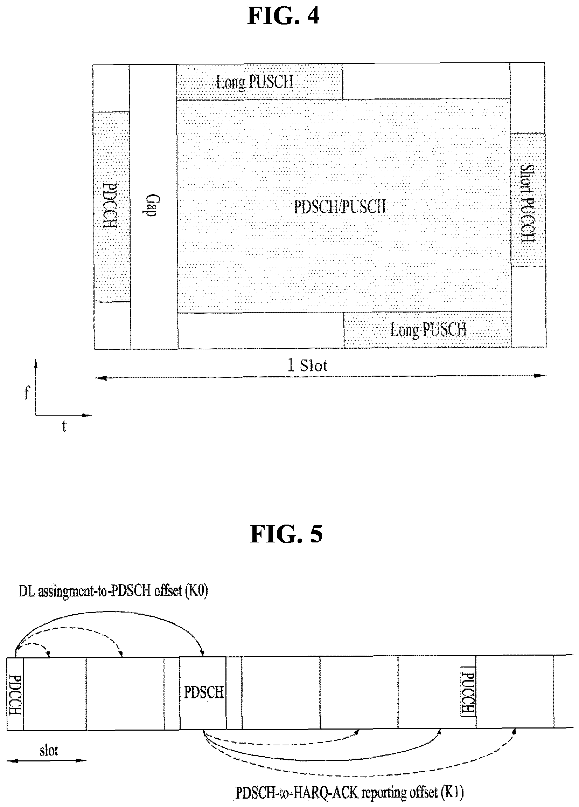

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols *N*^{PUCCH}_{symb} | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot
PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

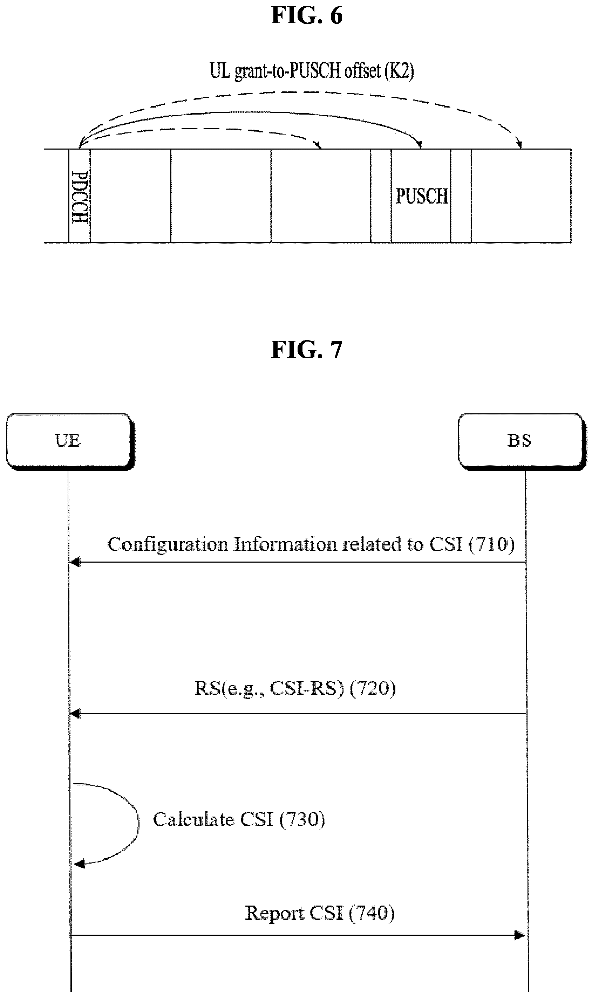

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurementrelated information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook defined in the NR standard (e.g., PMI codebook) may be broadly divided into Type I codebook and Type II codebook. The Type I codebook mainly targets single user (SU)-MIMO that supports both high-order and low-order. The Type II codebook may mainly support MI-MIMO that supports up to 2 layers. Compared to the Type I codebook, the Type II codebook may provide more accurate CSI, but signaling overhead may increase. An Enhanced Type II codebook is introduced to address a disadvantage in terms of CSI overhead of the existing Type II codebook by reducing a payload of the codebook in consideration of a correlation of a frequency axis.

A CSI report via a PUSCH may be set to Part 1 and Part 2. The Part 1 has a fixed payload size and is used to identify the number of information bits in Part 2. The Part 1 may be entirely transmitted before Part 2.
- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes RI (if reported), CQI, and an indication of the number of non-zero WB amplitude coefficients per layer of Type II CSI. The Part 2 includes the PMI of Type II CSI.
- For Enhanced Type II CSI feedback, the Part 1 includes RI (if reported), CQI, and an indication of the total number of non-zero WB amplitude coefficients for all layers of Enhanced Type II CSI. The Part 2 includes the PMI of Enhanced Type II CSI.

If a CSI report on a PUSCH includes two parts and a CSI payload to be reported is less than a payload size provided by a PUSCH resource allocated for the CSI report, the UE may omit a part of Part 2 CSI.

A semi-persistent CSI report performed in PUCCH format 3 or 4 supports Type II CSI feedback, but only Part 1 of Type II CSI feedback.

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

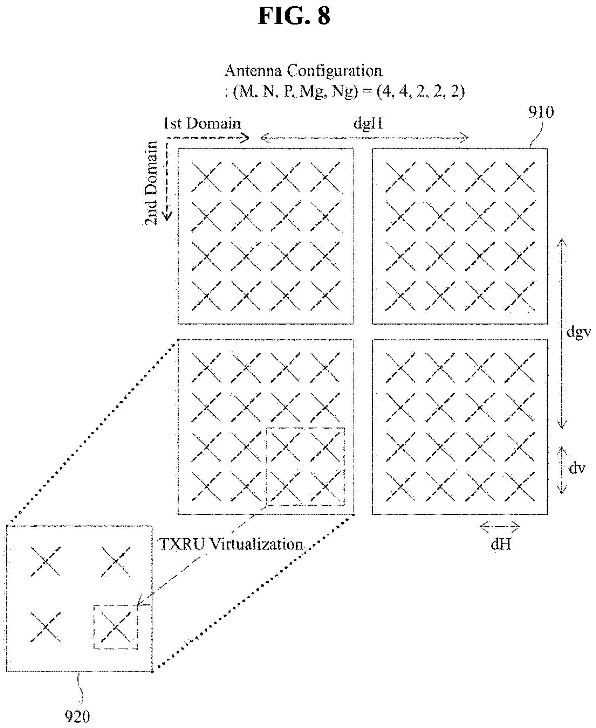

FIG. 8 illustrates an antenna configuration and a port configuration within a panel. Referring to FIG. 8, an antenna configuration 910 may be configured for a first domain and a second domain, and transmit-receive unit (TXRU) virtualization may be applied to a relationship between the antenna configuration 910 and a port configuration 920.

Regarding the antenna configuration 910, M represents the number of columns in the panel (i.e., the number of antenna ports in the first domain within the panel), N represents the number of rows in the panel (i.e., the number of antenna ports in the second domain within the panel), P represents the polarization (1: co-pol, 2: X-pol), Mg represents the number of panels in the first domain, and Ng represents the number of panels in the second domain. Accordingly, the total number of antenna elements may be expressed as P*M*N*Mg*Ng.

For example, the antenna configuration 910 shown in FIG. 8 corresponds to [(M, N, P, Mg, Ng) = (4, 4, 2, 2, 2)]. In FIG. 8, dgH represents a panel spacing in the first domain, dgV represents a channel spacing in the second domain, dH represents an antenna spacing in the first domain, and dV represents an antenna spacing in the second domain.

Regarding the panel configuration 920, N1 represents the number of columns in the first domain (i.e., the number of antenna ports in the first domain within the panel), N2 represents the number of rows in the second domain (i.e., the number of antenna ports in the second domain within the panel), and P represents the polarization (1: co-pol, 2: X-pol). Accordingly, the total number of CSI-RS ports in the panel may be expressed as P*N1*N2. For example, the panel configuration 920 shown in FIG. 8 corresponds to [(N1, N2, P) = (2, 2, 2)].

### CSI Codebook

A CSI codebook defined in the NR standard (e.g., precoding matrix indicator (PMI) codebook) may be broadly classified into Type I and Type II codebooks. For a better understanding of the codebook, Section 5.2.2.2 of TS 38.214 may be referenced (incorporated by reference).

### (1) Type I Codebook

The Type I codebook is primarily targeted at SU-MIMO (Single User MIMO) that supports both high and low orders. The Type I codebook may be divided into (i) single-panel codebooks and (ii) multi-panel codebooks. (i) The single-panel codebook may be based on the assumption that the UE receives DL transmission via a single antenna panel. (ii) The multi-panel codebook may support a BS configuration that uses multiple (e.g., 2 or 4) antenna panels. Unlike the single-panel codebook which supports ranks from 1 to 8, the multi-panel codebook may support ranks from 1 to 4.

The Type I codebook may be configured in terms of the selection of preferred discrete Fourier transform (DFT) vector(s) from an oversampled DFT vector set, which serves as the basis for the spatial domain (SD), and the indication of co-phase for the cross-polarization of BS antennas.

For example, a codebook vector for 1-layer transmission on a one-dimensional (1D) array antenna may be defined based on Equation 1. [Equation 1] $W \left(l\right) = \frac{1}{\sqrt{N}} \left[\begin{matrix}1 \\ {e}^{j \frac{2 π l}{ON}} \\ {e}^{j \frac{2 π l ∗ 2}{ON}} \\ … \\ {e}^{j \frac{2 π l ∗ \left(N-1\right)}{ON}}\end{matrix}\right]$

In Equation 1, N represents the number of antenna elements in the 1D antenna array, and O represents an oversampling factor. The index of the codebook vector, l may be l = 0, 1, 2, ..., O*N-1.

A precoder vector for a 2D antenna array may be defined based on the Kronecker product of two 1D array precoder vectors.

### (2) Type II Codebook

The Type II codebook primarily supports MU-MIMO (Multi-User MIMO) which supports up to two layers. Compared to the Type I codebook, the Type II codebook may provide more accurate CSI but may cause an increase in signaling overhead. In the Type II codebook, a PMI may identify a set of beams and a set of amplitude coefficients. The amplitude coefficients may be used to generate a weighted sum of beams. The Type II codebook may also identify the phase shift for co-phasing between beams. The Type II codebook for port selection may support reporting of wideband/long-term CSI (e.g., i1) and subband/short-term CSI (e.g., i2) based on a precoded (or beamformed) CSI-RS when the BS knows a channel between the UE and the BS.

In the case of the Type II codebook, multiple DFT vectors, which serve as the SD basis, are selected and linearly combined to achieve high resolution and superior MU-MIMO performance.

An enhanced Type II codebook has been introduced to address CSI overhead limitations of the conventional Type II codebook. The enhanced Type II codebook reduces the payload of the codebook by considering the correlation in the frequency domain.

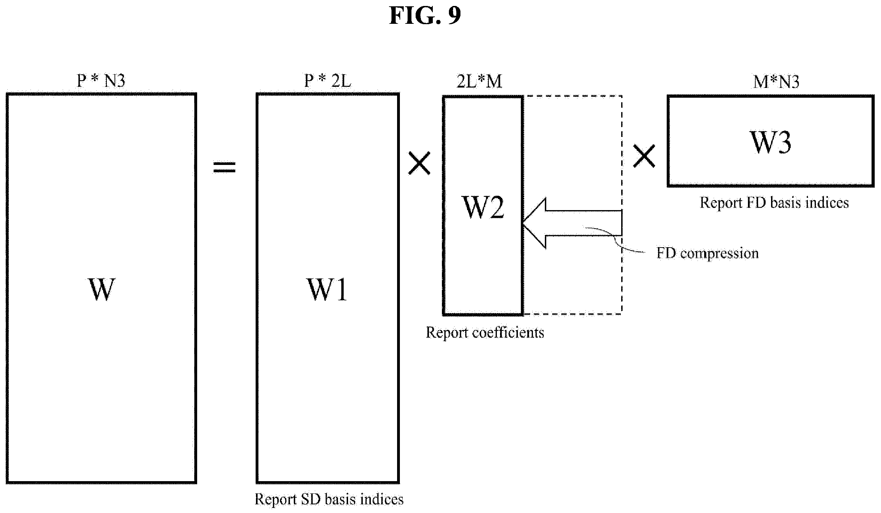

FIG. 9 is a diagram for explaining a structure of the enhanced Type II codebook.

Referring to FIG. 9, in the enhanced Type II codebook, a precoding matrix W may be expressed as W = W1*W2*W3. W1 corresponds to an SD basis related to SD compression, W3 corresponds to an FD basis related to FD compression, and W2 corresponds to linear combining (LC) coefficients according to the FD compression of W3. When the UE determines matrix W as the PMI of enhanced Type II, the UE reports indices of W1, coefficients of W2, and indices of W3 to a network. A dimension of matrix W is P(=2N1*N2)*N3, W1 is P*2L, W2 is 2L*M, and W3 is N3*M. The UE selects 2L basis beam vectors with respect to W1, M LC coefficients with respect to W2, and M FD basis vectors with respect to W3 (in this case, each vector is an orthogonal DFT vector of size N3*1). L may be a parameter for SD compression, which may be the number of SD beams and may be 2, 3, or 6. N3 and M may be parameters for FD compression, N3 may be a DFT size for FD compression and expressed as N3=N_{SB}*R, and R may be a granularity between CQI and PMI, which may be 1 or 2. M may be the number of FD compression units and expressed as M = ceiling (p*(N3/R)). A (L, p, β) parameter combinations (paramCombination-r16) that defines enhanced Type II is shown in Table 6.

**[Table 6]**

| *paramCombination-r16* | L | Pᵥ | | β |
|---|---|---|---|---|
| | | υ ∈ {1,2} | υ ∈ {3,4} | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/2 | 1/4 | 1/2 |

In Table 6, v corresponds to RI, and β is a parameter related to an upper limit of LC coefficients selected by the UE.

An enhanced Type II codebook vector that constitutes a specific l-th layer may be expressed as shown in Equation 2. [Equation 2] $\begin{matrix}{W}_{{q}_{1} , {q}_{2} , {n}_{1} , {n}_{2} , {n}_{3 , l} , {p}_{l}^{\left(1\right)} , {p}_{l}^{\left(2\right)} , {i}_{2 , 5 , l} , t}^{l} = \frac{1}{\sqrt{{N}_{1} {N}_{2} {γ}_{t , l}}} \left[\begin{matrix}{\sum }_{i = 0}^{L - 1} {v}_{{m}_{1}^{\left(i\right)} , {m}_{2}^{\left(i\right)}} {p}_{l , 0}^{\left(1\right)} {\sum }_{f = 0}^{{M}_{υ} - 1} {y}_{t , l}^{\left(f\right)} {p}_{l , i , f}^{\left(2\right)} {φ}_{l , i , f} \\ {\sum }_{i = 0}^{L - 1} {v}_{{m}_{1}^{\left(i\right)} , {m}_{2}^{\left(i\right)}} {p}_{l , 1}^{\left(1\right)} {\sum }_{f = 0}^{{M}_{υ} - 1} {y}_{t , l}^{\left(f\right)} {p}_{l , i + L , f}^{\left(2\right)} {φ}_{l , i + L , f}\end{matrix}\right] \\ {γ}_{t , l} = {\sum }_{i = 0}^{2 L - 1} {\left({p}_{l , \left⌊\frac{i}{L}\right⌋}^{\left(1\right)}\right)}^{2} {\left|{\sum }_{f = 0}^{{M}_{υ} - 1} {y}_{t , l}^{\left(f\right)} {p}_{l , i , f}^{\left(2\right)} {φ}_{l , i , f}\right|}^{2}\end{matrix}$

In Equation 2, l is defined as *l*=1, 2 ,3, 4 and N1 and N2 represent the lengths of first and second SDs for each BS (or each port group). The term vₘ₁(i), ₘ₂(j) (where i = 0, 1, ..., L-1) refer to L SD DFT vectors selected for linear combining (for example, the term vₘ₁(i), ₘ₂(j) may be a 1D DFT vector or 2D DFT vector, depending on the antenna configuration of each BS). The codebook vector is determined by the parameters q₁, q₂, n₁, n₂, which corresponds to the parameters introduced to select optimal L beams out of a total of Q1*N1*Q2*N2 beams (where Q1 and Q2 are oversampling factors for the first and second domains, respectively). In addition, n₃ is a parameter introduced to select the frequency domain (FD) DFT basis, and pₗ⁽¹⁾ and pₗ⁽²⁾ correspond to amplitude coefficients. Moreover, pₗ⁽¹⁾ is an indicator with a 4-bit quantization level that indicates a relative amplitude based on the largest value (based on the polarization that contains the strongest coefficient) among the strongest coefficients (p_ref) per polarization for each layer. It uses 4 bits to indicate the relative amplitude, pₗ⁽²⁾ is an indicator that represents a relative amplitude with three bits, based on **p_ref** within each polarization. The four-bit phase coefficient indicator is i_{,2,5,l}, which is associated with φ_{l,i,f}. Further, t represents a frequency domain index (t = 0, ..., N3-1) (for example, a PRB or a group of subbands), which may correspond to each element of an FD basis vector y_{t,l}^{(f)}, which is an N3-length DFT vector.

### CSI omission related operation

The NR standard provides that, if necessary, CSI part 2 of a two-part CSI may be omitted from a CSI report based on a priority value, which is referred to as CSI omission.

Table 7 summarizes a part of the content of CSI omission on a PUCCH defined in section 9.2.5.2 of NR standard document TS38.213. For convenience, Table 7 only covers some of the content, but other content omitted from Table 7 may be referenced in section 9.2.5.2.

**[Table 7]**

| |
|---|
| When the UE has one or more CSI reports and zero or more HARQ-ACK/SR information bits to be transmitted on a PUCCH (where HARQ-ACK is for a PDSCH received without a PDCCH), |
| - If at least some of the CSI reports overlap and J PUCCH resources (J is 2 or less) are provided to the UE in a slot by multi-CSI-PUCCH-ResourceList for PUCCH format 2, 3 or 4, |
| - If $\left({O}_{ACK}+{O}_{SR}+{O}_{CSI}+{O}_{CRC}\right) \leq {\left({M}_{RB}^{PUCCH}⋅{N}_{sc , ctrl}^{RB}⋅{N}_{symb - UCI}^{PUCCH}⋅{Q}_{m}⋅r\right)}_{0} ,$ the UE uses PUCCH format 2/3/4 resource 0. |
| - Otherwise, if $\left({O}_{ACK}+{O}_{SR}+{O}_{CSI}+{O}_{CRC}\right) > {\left({M}_{RB}^{PUCCH}⋅{N}_{sc , ctrl}^{RB}⋅{N}_{symb - UCI}^{PUCCH}⋅{Q}_{m}⋅r\right)}_{j}$ and $\left({O}_{ACK}+{O}_{SR}+{O}_{CSI}+{O}_{CRC}\right) \leq {\left({M}_{RB}^{PUCCH}⋅{N}_{sc , ctrl}^{RB}⋅{N}_{symb - UCI}^{PUCCH}⋅{Q}_{m}⋅r\right)}_{j + 1} ,$ the |
| UE transmits a PUCCH carrying HARQ-ACK, SR, and CSI reports by using PUCCH format 2/3/4 resource j+1. |
| - Otherwise, the UE uses PUCCH format 2/3/4 resource J-1 and reported selects ${N}_{CSI}^{reported}$ CSI reports in ascending order of priorities defined in 38.214 to transmit the reports together with HARQ-ACK and SR. |
| When the UE has HARQ-ACK, SR and wideband or subband CSI reports and the UE determines a PUCCH resource having PUCCH format 2, or when the UE has HARQ-ACK, SR and wideband CSI reports and the UE determines a PUCCH resource having PUCCH format 3/4, |
| - If not $\left({O}_{ACK}+{O}_{SR}+{O}_{CSI - part 1}+{O}_{CRC , CSI - part 1}\right) \leq {M}_{RB}^{PUCCH} ⋅ {N}_{sc , ctrl}^{RB} .$ ${N}_{symb - UCI}^{PUCCH} ⋅ {Q}_{m} ⋅ r$ , the UE selects ${N}_{CSI}^{reported}$ CSI reports from the total ${N}_{CSI}^{total}$ CSI reports in ascending order of priorities defined in 38.214 and transmits the reports together with reported HARQ-ACK and SR. In this case, ${N}_{CSI}^{reported}$ satisfies $\left({O}_{ACK}+{O}_{SR}+\right.$ $\left.{\sum }_{n = 1}^{{N}_{CSI}^{reported}} {O}_{CSI - part 1 , n} + {O}_{CRC , CSI - part 1 , N}\right) \leq {M}_{RB}^{PUCCH} ⋅ {N}_{sc , ctrl}^{RB} ⋅ {N}_{symb - UCI}^{PUCCH} ⋅ {Q}_{m} ⋅ r$ and $\left({O}_{ACK}+{O}_{SR}+{\sum }_{n = 1}^{{N}_{CSI}^{reported} + 1} {O}_{CSI - part 1 , n} + {O}_{CRC , CSI - part 1 , N + 1}\right) > {M}_{RB}^{PUCCH} .$ ${N}_{sc , ctrl}^{RB} ⋅ {N}_{symb - UCI}^{PUCCH} ⋅ {Q}_{m} ⋅ r$ . *O*_{CRC,CSI-part1,*N*} is the number of CRC bits corresponding to ${O}_{ACK} + {O}_{SR} + {\sum }_{n = 1}^{{N}_{CSI}^{reported}} {O}_{CSI - part 1 , n}$ UCI bits, and |
| *O*_{CRC,CSI-part1,*N*+1} is the number of CRC bits corresponding to the ${O}_{ACK} + {O}_{SR} + {\sum }_{n = 1}^{{N}_{CSI}^{reported} + 1} {O}_{CSI - part 1 , n}$ UCI bits. |

Table 8 summarizes a part of a priority value calculation method of CSI part 2 defined in TS38.214.

**[Table 8]**

| |
|---|
| CSI reports are related with a priority value Pri*_{iCSI}*(*y, k, c, s*) = 2 · *N_{cells}* · *Mₛ · y + N_{cells} · Mₛ · k + Mₛ · c + s.* |
| - y=0 is aperiodic CSI reports on a PUSCH, y=1 is semi-permanent CSI reports on a PUSCH, y=2 is semi-permanent CSI reports on a PUCCH, y=3 is periodic CSI reports on a PUCCH, |
| - k=0 is CSI reports carrying L1-RSRP or L1-SINR, k=1 is CSI reports not carrying L1-RSRP or L1-SINR, |
| - c is a serving cell index, Ncell is a higher layer parameter maxNrofServingCells, |
| - s is report configuration ID, and Ms is a higher layer parameter maxNrofCSI-ReportConfigurations. |

Table 9 shows a part of the content of CSI omission on a PUSCH defined in section 5.2.3 of TS38.214.

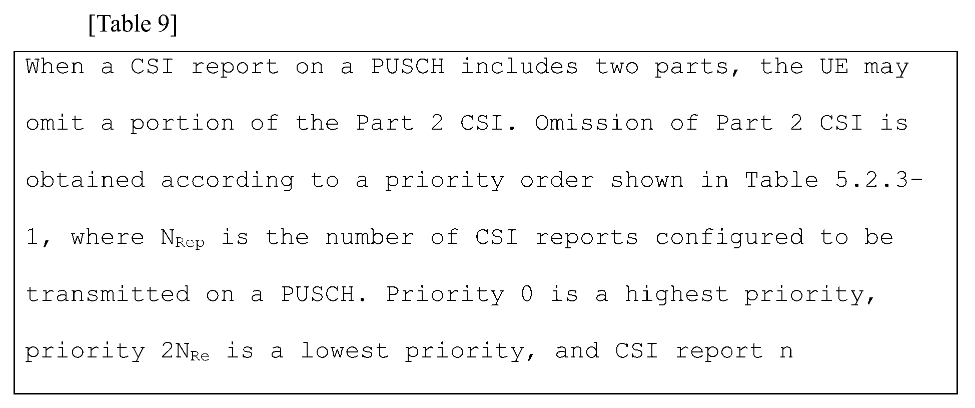

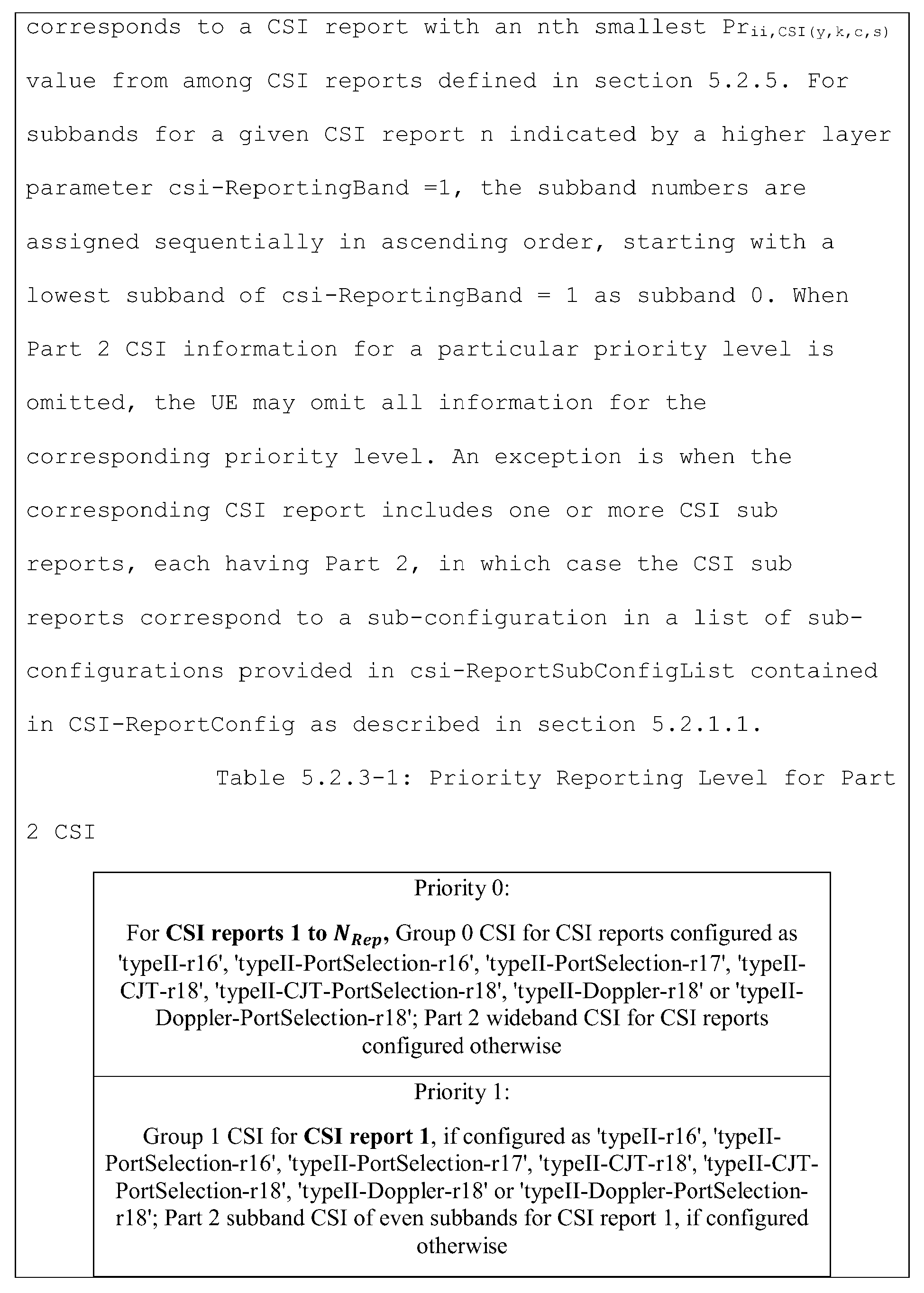

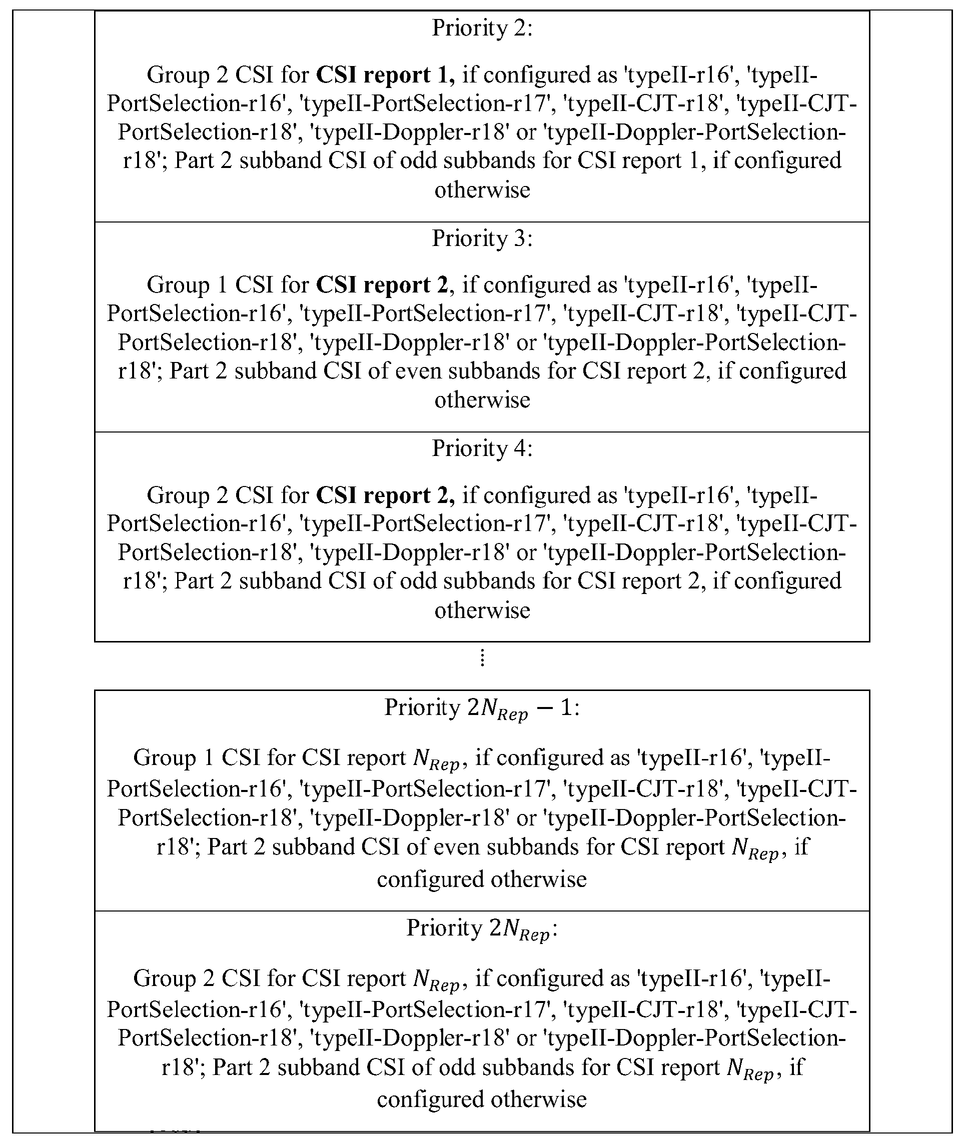

### CSI priority for multiple CRI-based CSI reporting

In the following description, channel measurement resource (CMR) may include CSI-RS resources (e.g., non-zero power CSI-RS) configured for channel measurement. An interference measurement resource (IMR) may include a CSI-RS resource set for interference measurement (e.g., zero/non-zero power CSI-RS).

In Rel-19 NR MIMO or later standards, CSI supporting up to 128 CSI-RS ports in FR1 may be considered to increase system throughput of DL/UL and for more flexible MIMO operation.
a. Type-I codebook refinement supporting up to a total of 128 CSI-RS ports across all resources, assuming legacy CSI-RS resources (with up to 32 CSI-RS ports per resource), based on extension of legacy codebooks.
b. Type-II codebook refinement supporting up to a total of 128 CSI-RS ports across all resources, assuming legacy CSI-RS resources (with up to 32 CSI-RS ports per resource), based on extension of legacy codebooks, without modifying any codebook parameter other than introducing additional values for the number of ports codebook parameter(s).
c. Extension of CRI(s)-based CSI reporting (CQI/PMI/RI calculated per CRI for ≥1 CRIs) for hybrid beamforming supporting up to a total of 128 CSI-RS ports across all resources, with up to 32 CSI-RS ports per resource, without new codebook design.

According to c above, in the case of multiple CSI-RS resource indicator (CRI)-based CSI reporting, a BS may receive, from the UE, reports of a plurality of CSIs according to a plurality of (analog) beamforming assumed by the BS and utilize the reports for scheduling for MU-MIMO. CSI reporting may be performed for a plurality of CMR/IMR combinations for MU-MIMO assumed by the BS. Unlike existing CSI reports, the multiple CRI-based CSI reporting involves a plurality of CSI measurement/calculation according to multiple CMR/IMR and corresponding multiple CSI reports, and thus the existing CSI priority rules and CSI omission rules for CSI collision handling need to be changed or newly defined. Here, when two CSIs are said to collide, this means a case in which resources carrying the two CSIs overlap in the time/frequency axis. (Two CSI reports are said to collide if the time occupancy of the physical channels scheduled to carry the CSI reports overlap in at least one OFDM symbol and are transmitted on the same carrier.)

In this specification, solutions to address issues related to CSI priority rules and CSI omission rules for CSI collision handling in multiple CRI-based CSI reporting are proposed.

Referring to Table 8, the smaller the Pri_{iCSI(y,k,c,s)} value calculated by the Priority formula, the higher the priority, and the Priority formula may be broadly divided into four priority level calculation processes. 1) A first process is based on a type of channel carrying CSI (y value) and a high priority is given in the order of AP CSI on PUSCH > SP CSI on PUSCH > SP CSI on PUCCH > Periodic CSI on PUCCH. 2) Then, a high priority is given in the order of beam reporting related CSI > non-beam reporting related CSI depending on a priority based on a type of the corresponding CSI (k value) and whether the corresponding CSI is beam reporting related CSI (whether L1-RSRP/SINR is included). 3) A next level is a cell index (c value), and 4) a next level is prioritized in the order of reportConfigID, and a final priority value is determined therethrough.

Multiple CRI based CSI reporting includes Part 1 CSI and Part 2 CSI similar to the existing legacy CSI, Part 1 CSI mainly includes CSIs that define/determine a payload of Part 2 CSI with a fixed payload, and representative examples of Part 1 CSI include CRI/1st CQI/RI/non-zero coefficient indicator (for Type 2 CSI). Part 2 CSI includes the remaining CSIs excluding the Part 1 CSI, and may typically include 2nd CQI, LI, and PMI. In the case of multiple CRI based CSI reporting, RI/CQI/PMI/LI, and the like are calculated/reported for each of the multiple CSIs selected/reported by CRI in a combination of CMR (group) and/or IMR, or some CSI elements may be commonly reported to multiple CMR (group) and/or IMR. For example, L resources corresponding to L CRIs are selected from multiple CMR (groups) and/or IMRs, and the UE may report L CRIs and L CSIs (1 CSI for each CRI (e.g., 2 part CSI)) at once through multiple CRI based CSI reporting.

For example,
- Part 1 CSI includes at least CRI / RI / 1st CQI, or CRI may be considered as a higher level Part 0 CSI and used to determine a payload of Part 1 CSI. Here, RI or 1st CQI (WB CQI) may be calculated/reported as CMR (group) / IMR common or CMR (group) / IMR specific.
- Part 2 CSI may include at least 2nd CQI/LI/PMI, where 2nd CQI (WB CQI) or WB PMI may be calculated/reported as CMR (group)/IMR common or CMR (group)/IMR specific.

For such multiple CRI based CSI reporting, the following priorities may be proposed.

### Proposal 1

Multiple CRI based CSI reporting has the following CSI report priority, Pri_{iCSI(y,k,c,s)}.
(1) Alt 1: Multiple CRI based reporting may have a higher priority than the existing normal CSI reporting. For example, the multiple CRI based reporting may have the same priority as beam related reporting, as in Option 1, or have a lower priority value than beam related reporting, as in Option 2. Alt 1 may be expressed in the following formula.

### 1) Option 1: Beam = Multiple CRI based CSI report > other CSI report

In this case, a k value of the CSI report priority value, Pri_{iCSI(y,k,c,s)}, described in Table 8 needs to be modified as follows.
- k= 0 for CSI reports carrying L1-RSRP or L1-SINR or multiple CRI (>1)
- k= 1 for CSI reports not carrying L1-RSRP or L1-SINR or multiple CRI (>1);

### 2) Option 2: Beam > Multiple CRI based CSI report > other CSI report

${Pri}_{iCSI \left(y, k, c, s\right)} = 3 * Ncells * Ms * y + Ncells * Ms * k + MS * c + s$
- k=0 for CSI reports carrying multiple CRI (>1)
- k=1 for CSI reports carrying L1-RSRP or L1-SINR
- k=2 for CSI reports not carrying L1-RSRP or L1-SINR or multiple CRI (>1);

(2) Alt 2: As a priority of a report config level, multiple CRI based CSI report has a higher priority if conflicting with the CSI report indicated based on the existing legacy CSI report config and has a lower priority if conflicting with lower layer triggered mobility (LTM)-CSI.

The reason why the multiple CRI based CSI report has the same priority as the beam related report even though the report is not a beam related CSI report in option 1 is because the multiple CRI based CSI includes CSI reports for multiple beams implemented by the BS for MU-MIMO.

In option 2, multiple CRI reporting includes more information than other CSI reports (e.g., CSI reporting for multiple CMRs/IMRs), and the corresponding CSI is a CSI that triggers for the purpose of MU scheduling, and thus the corresponding CSI may be configured to have the highest priority from among CSIs.

Alternatively, a new multiple CRI based CSI report config, for example, MCRI-CSI-ReportConfig may be configured. In this case, a priority of the report config level may be determined, and for example, the following priorities may be considered. LTM-CSI-ReportConfig → MCRI-CSI-ReportConfig → CSI-ReportConfig, and here, LTM-CSI refers to a CSI report related with L1/L2 triggered mobility. Multiple CRI based CSI report has a higher priority than the CSI report set/reported with (legacy) CSI report config if conflicting with the CSI report indicated based on the existing legacy CSI report config and multiple CRI based CSI report has a lower priority than the CSI set/reported with LTM-CSI-ReportConfig if conflicting with LTM-CSI.

Proposal 1 above defines a collision rule for the newly introduced multiple CRI-based CSI report, and thus when the multiple CRI-based CSI report conflicts with a plurality of CSI reports including the multiple CRI-based CSI, the BS and the UE may operate without ambiguity regarding CSI priority. For example, there may be an advantage in that multiple CRI-based CSI reports containing relatively large amounts of information are not dropped and are reported to the BS. From this aspect, the multiple CRI-based CSI reports may be limited to PUSCH-based CSI reports.

As described above, in NR, when the amount of radio resources (e.g., PUSCH/PUCCH) set for the CSI report is smaller than a CSI payload that the UE intends to report, instead of dropping the entire CSI, an operation is supported to omit some CSI to fit the available CSI payload size. A subject of the CSI omission is Part 2 CSI. Part 1 CSI mainly includes CSIs that determine/define a payload of Part 2 CSI with a fixed payload, and representative examples thereof include CRI/1st CQI/RI/non-zero coefficient indicator (for Type 2 CSI). Part 2 CSI includes the remaining CSIs excluding the Part 1 CSI, and may typically include 2nd CQI, LI, and PMI. In the case of the multiple CRI based CSI reporting, RI/CQI/PMI/LI, and the like may be calculated and reported respectively according to a combination of CMR (group) and/or IMR, and some CSI elements may be commonly reported to multiple CMR (group) and/or IMR.

Multiple CRI based CSI reports also needs to support this CSI omission, and to support this, the following is proposed.

### Proposal 2

For multiple CRI based CSI reports, the following Part 2 CSI omission rules are proposed.

In the description of Proposal 2, a high priority may mean a low omission priority, and conversely, a low priority may mean a high omission priority. A high omission priority may mean that if a CSI omission is performed, this may be omitted first.
(1) Method 1: When the UE calculates/reports L CSIs for multiple CMRs/IMRs, the L CSIs may be classified/distinguished into group 0/1/2 CSI (or WB CSI/even SB CSI/odd SB CSI) according to a codebook type, similar to the legacy CSI omission rule. Group 0/1/2 CSI (or WB/SB CSI) are encoded/mapped to UCI sequentially according to a priority (MCRI_priority) of L CSIs. When CSI omission is performed, omission is performed in the order of group 2→1→0 as in the legacy omission rule, and within the same group CSI, Part 2 CSI omission is performed in the order of MCRI_priority from lowest to highest.
(2) Method 2: When the UE calculates/reports L CSIs for multiple CMRs/IMRs, group 0/1/2 CSIs may be newly defined for the L CSIs. With respect to CSI omission, Part 2 CSI omission is performed in the order of group 2→1→0 like the legacy omission rule.
(3) Method 3: When the UE calculates/reports L CSIs for multiple CMRs/IMRs, the L CSIs may be classified/distinguished by newly defining group 0/1/2/.../L-1 CSIs according to MCRI_priority. When CSI omission needs to be performed, Part 2 CSI omission may be performed in the order of group L-1→L-2→...→2→1→0.
(4) Method 4: When the number of CSIs calculated/reported by the UE for multiple CMRs/IMRs is L, Part 2 CSI omission is performed by assigning different CSI omission priorities to the best N CSI reports (high priority) from among the L CSIs and the remaining (L-N) CSI reports (lower priority). From among L, the best N CSI reports (high priority) may be assigned a low CSI omission priority, and the remaining (L-N) CSI reports (lower priority) may be assigned a high CSI omission priority.

Hereinafter, Table 10 assumes the following to illustrate a more specific example of proposal 2. K (e.g., 8) CMRs are set in CSI-ReportConfig or a new report config (e.g., MCRI-CSI-ReportConfig) as follows. The UE assumes that only one IMR is commonly applied to CMRs.

**[Table 10]**

| |
|---|
| - CMR#1 = CSI-RS resource #1 - 32 port CSI-RS, |
| - CMR#2 = CSI-RS resource #2 - 32 port CSI-RS, |
| - CMR#3 = CSI-RS resource #3 - 32 port CSI-RS, |
| - CMR#4 = CSI-RS resource #4 - 32 port CSI-RS, |
| - CMR#5 = CSI-RS resource #5 - 32 port CSI-RS, |
| - CMR#6 = CSI-RS resource #6 - 32 port CSI-RS, |
| - CMR#7 = CSI-RS resource #7 - 32 port CSI-RS, |
| - CMR#8 = CSI-RS resource #8 - 32 port CSI-RS, |
| - IMR#1 = ZP CSI-RS resource #1 |

In the above example, it is assumed that the UE selects four CMRs to be reported based on CRI, CMR#1, #3, #4, and #7, and the best CMR (N=1) is CMR#3. Here, a reference for selecting the best CMR may be based on a metric such as (e.g., RSRP/CQI/SINR/RI/Throughput) and/or a threshold (instructed/set by the BS). Although the example assumes a single ZP CSI-RS resource as IMR, a plurality of ZP CSI-RS resource and/or NZP CSI-RS (CSI-IM) may be extensively applied. In this case, CRI selection based on a pair of CMR (group) and IMR may be performed, and CSI reporting may be performed based thereon. For transmission power configuration of the plurality of CMRs (e.g., powerControlOffset: Power offset of PDSCH RE to NZP CSI-RS RE and/or powerControlOffsetSS: Power offset of NZP CSI-RS RE to SSS RE), the CMRs may be set/indicated resource (group) wise, and for the IMR based on NZP CSI-RS (e.g., NZP CSI-IM), the higher layer parameter may be set/indicated resource wise.

Based on the above example, Methods 1/2/3 of Proposal 2 are additionally described. In the above example, it is assumed that MCRI priorities corresponding to CMR#1, #3, #4, and #7 are given in the order of CMR#3, #1, #4, and #7.
(1) In Method 1, a CSI report index of a multiple CRI based CSI (MCRI CSI) report may be determined based on calculation of a CSI priority value (i.e., Pri_{iCSI(y,k,c,s)}) including Proposal 1, and the CSI report index determined as such is referred to as #n. Each group 0/1/2 CSI (or WB/even SB/odd SB, collectively referred to as group hereinafter) of Part 2 CSI of CSI report # nis configured for each CMR, and an encoding/mapping order within each group is determined by MCRI_priority (from highest to lowest). Here, the configuration of Part 2 CSI is based on the codebook type and/or parameters set by the BS. Definition of group 0/1/2 CSI is based on codebook type and/or parameters.

Group 0 CSIs of CSI report #n belong to priority 0 in CSI omission priority (i.e., Table 5.2.3-1 of TS 38.214, extracted in Table 9), and are mapped/encoded (in UCI) in the order of CMR #3 → CMR #1 → CMR#4 → CMR#7, from highest to lowest MCRI_priority in the nth order within priority 0.

Group 1 CSIs of CSI report #n belong to CSI omission priority 2n-1, and group 1 CSIs corresponding to CMR #3 → CMR #1 → CMR#4 → CMR#7 in CSI omission priority 2n-1 are encoded sequentially.

Group 2 CSIs of CSI report #n belong to CSI omission priority 2n, and group 2 CSIs corresponding to CMR #3 → CMR #1 → CMR#4 → CMR#7 in CSI omission priority 2n are encoded sequentially.

Lastly, the order of CSI omission is from highest to lowest CSI omission priority value, i.e. priority 0 is omitted last.

Group 1/2 CSI of MCRI CSI is not omitted for the entire group at a group level, but CSI omission may be performed based on MCRI_priority for each MCRI CSI level within a group, and in this case, the order of CSI omission is as follows.
[CSI omission priority 2n] Group 2 CSI and/or odd SB CSI of CSI corresponding to CMR#7 →
[CSI omission priority 2n] Group 2 CSI and/or odd SB CSI of CSI corresponding to CMR#4 →
[CSI omission priority 2n] Group 2 CSI and/or odd SB CSI of CSI corresponding to CMR#1 →
[CSI omission priority 2n] Group 2 CSI and/or odd SB CSI of CSI corresponding to CMR#3 →
[CSI omission priority 2n-1] Group 1 CSI and/or even SB CSI of CSI corresponding to CMR#7 →
[CSI omission priority 2n-1] Group 1 CSI and/or even SB CSI of CSI corresponding to CMR#4 →
[CSI omission priority 2n-1] Group 1 CSI and/or even SB CSI of CSI corresponding to CMR#1 →
[CSI omission priority 2n-1] Group 1 CSI and/or even SB CSI of CSI corresponding to CMR#3 →
[CSI omission priority 2n-2] Group 2 CSI of CSI report #n-1 →
[CSI omission priority 2n-3] Group 1 CSI of CSI report #n-1 →
[CSI omission priority 0] Group 0 CSI of CSI report 1 to #n

In Method 1, information on MCRI_priority on multiple CSIs in multiple CRI based CSI reports may be included in Part 1 CSI and reported to the BS, or the BS may instruct the UE through a higher layer. Based on an implicit rule, it may be determined in the order of CMR ID (or CMR/IMR pair ID or CMR group ID) or in the order set in report_config. For convenience of explanation below, it is assumed that MCRI_priority is a priority value determined by an implicit rule or a value explicitly reported above.

(2) For Method 2, the existing legacy rule is followed, but unlike Method 1, group 0/1/2 CSI is newly defined. For example, in Table 10, group 0 CSI may include CSI corresponding to CMR#3, group 1 CSI may include CSI corresponding to CMR#1, and group 2 CSI may include CSI corresponding to CMRs #4 and #7. The UE may report to the BS which CSIs belong to which groups by including this information in the CSI report (for example, by including this information in part 1 CSI). Alternatively, the BS may set/instruct the UE to set/instruct group 0/1/2 CSI for the CSI according to the corresponding CMR (and/or IMR) in a higher layer. If the CSI(s) belonging to a specific group are not selected for CRI selection of the UE, the CSI of the corresponding group is considered to not exist, and a CSI omission priority is skipped when the UE omits CSI.

As another example of Method 2, the configuration for group 0 of CSI report #n may perform legacy part 2 CSI omission by separating each CSI except group 0 CSI from L CSIs according to CMR (and/or IMR pair) into group 1/2 CSI as in Method 1 (sequentially mapping/encoding L group 0 CSIs (to UCI) based on MCRI_priority). Method 2 above has an advantage of being able to reuse legacy part 2 CSI omission without change.

(3) As an example of Method 3 (extending the group in Method 2), each group and MCRI CSI are mapped 1:1 based on MCRI_priority. For example, in Table 10, group 0 CSI may include CSI corresponding to CMR#3, group 1 CSI may include CSI corresponding to CMR#1, group 2 CSI may include CSI corresponding to CMR#4, and group 3 CSI may include CSI corresponding to CMR#7. Then, group 0 CSI of CSI report #n belongs to CSI omission priority 0, and the remaining group 1 CSI to group 3 CSI belong to CSI omission priority 2n-1, priority 2n, priority 2n+1, and omission is performed in the order of high CSI omission priority.

Generalizing the above example, in CSI report #n, which is MCRI-based CSI, each of the L CSIs may belong to L groups 0 to L-1, group 0 CSI belongs to CSI omission priority 0, and group 1 CSI to group L-1 CSI are mapped to CSI omission priority 2n-1 to CSI omission priority 2n+L-2.

As another example of Method 3, the configuration for group 0 of CSI report #n may be performed based on Method 1 (sequentially mapping/encoding L group 0 CSIs (to UCI) based on MCRI_priority) and defines CSIs excluding group 0 CSI from each of L CSIs according to CMR (and/or IMR pair) as group 1/2/3/...L CSI, respectively. The mapping order is based on MCRI_priority. Then, CSI rerport #n, which is CSI, performs L-level CSI omission. That is, group 1 CSI to group L CSI are mapped to CSI omission priority 2n-1 to CSI omission priority 2n+L-1, and part 2 CSI omission is performed.

For example, (i) L CRIs and (ii) L CSIs related with the L CRIs may be included in an M CRI based CSI report. In this case, MCRI_priority given according to the related CRI may be assigned to the L CSIs, and the order (arrangement/alignment order) in which the L CSIs are included/omitted in the report may be determined according to the MCRI_priority.

As a detailed example of Method 3, an arrangement/alignment/omission priority method such as Example 1 and Example 2 in Table 11 may be considered. In Examples 1 and 2, the description of group 0 is omitted.

**[Table 11]**

| Example 1) |
|---|
| ... |
| Group 1 CSI of even subbands for highest priority CRI |
| Group 2 CSI with odd subbands for highest priority CRI |
| Group 1 CSI of even subbands for second highest priority CRI |
| Group 2 CSI with odd subbands for second highest priority CRI |
| ..., |
| Group 1 CSI of even subbands for Lth highest priority CRI |
| Group 2 CSI of odd subbands for Lth highest priority CRI |

| Example 2) |
|---|
| ... |
| Group 1 PMI component for highest priority CRI |
| Group 2 PMI component for highest priority CRI |
| Group 1 PMI component for second highest priority CRI |
| Group 2 PMI component for second highest priority CRI |
| ..., |
| Group 1 PMI component for Lth highest priority CRI |
| Group 2 PMI component for Lth highest priority CRI |

(4) In Method 4, MCRI CSIs may be divided into two priorities and different CSI omission priorities may be assigned to respective priorities. In the example of Table 10, if N=1, the CMR corresponding to 1 is CMR#3, which belongs to high priority CSI. These high priority CSI(s) may, for example, follow legacy CSI omission (and omission priority). For example, if MCRI CSI is CSI report #n and the CSI report corresponding to CMR#3 is based on legacy, CSI omission for CSI report #n may be performed based on legacy Part2 CSI omission. For CSI corresponding to CMR#1, #4, and #7, the CSI omission priority corresponding to CSI report #n+X may be set instead of the CSI omission priority for CSI report #n. Here, a value X may be a value set by a BS or may be promised in advance. For example, if there are M CSI report indices reported through PUSCH (or PUCCH) (e.g., CSI report#1, #2, ... #n, #n+1, ....#M), the value X may be set or promised to be the same as CSI report #M+1 for CSI corresponding to CMR#1, #4, and #7.
In other words, MCRI CSIs with lower priority have lower CSI omission priority than the M CSI reports when there are M CSI reports on a PUSCH (or PUCCH). For convenience, this is described for N = 1, but the case where N > 1 may be extensively applied. For example, when N=2, two CSI reports are mapped/encoded (in UCI) as CSI corresponding to CSI report #n in the order determined by priority or other rule-based order, and CSI omission may be performed based on a legacy CSI omission rule or Method 1.

As another example of Method 4, group 0 CSIs of MCRI CSI are configured as in Method 1, and best N CSI with high priority and L-N CSI with low priority are configured based on CSIs excluding group 0 CSI, and thus the CSI omission rule of the embodiment of Method 4 may be followed.

In Proposal 2 described above, when there are more CSI payloads to report than the PUCCH/PUSCH payload set by the BS for the CSI report in a method in which the UE measures a channel/interference based on multiple CMRs/IMRs based on configuration of the BS and reports multiple CRIs/CSIs in a manner set by the BS. For example, this is an operation of omitting the CSI calculated to fit a PUCCH/PUSCH payload from the reports when the UE completes calculation for L or M CSI reports.

As another method, the UE may select a value of M such that redundant CSI (CSI omitted or CSI dropped) is not calculated based on conditions based on the PUSCH/PUCCH payload and/or target rate. For example, before calculating the overall CSI (e.g., CRI/RI/CQI/PMI), the M value may be determined first, and CSI reporting may be performed according to the M value. A method of determining the M value is to set/indicate a reference payload value for one CSI report to a higher layer. For example, in the CSI report config, the (maximum) allowable CSI payload per CSI report may be set/indicated. Then, the UE may determine the M value based on the payload and report the CMR/IMR corresponding to the M value as CRI or the like. As an example of the method, if the (maximum) allowable CSI payload per CSI is set to 100 bits and the scheduled PUSCH/PUCCH payload for CSI reporting is set to 250 bits, the UE may determine up to 2 (M=2) to perform CRI reporting and 2 RI/CQI/PMI reports.

In Method 1/2/3/4 of Proposal 2 above, it is proposed to sequentially omit a part related to SB CSI of Part 2 CSI or a part related to group 1 and 2 CSI in units of CSI omission priority and to omit a part corresponding to group 0 or WB CSI at once.

In addition to Method 1/2/3/4 of Proposal 2 above, group 0/WB CSI may also perform omission according to the CSI report order. For example, if all other priorities are omitted and only CSI omission priority 0 remains, omissions are performed sequentially in order of the CSI report index within priority 0 from the largest to the smallest rather than determining whether to drop priority 0 as a whole. For example, when MCRI based CSI reporting corresponds to CSI report #n, group 0 CSI/WB CSI is sequentially performed for CSI omission based on MCRI_priority in the omission order of the CSI report #n, and thus omission may be performed until the result is appropriate for a payload set by the BS.

Although CSI omission of Proposal 2 is explained based on CSI on PUSCH, the CSI omission may also be extended to CSI on a PUCCH (e.g., Table 7). Mainly for CSI on a PUCCH, the CSI omission of Proposal 2 is applicable to Type 1 CSI, and when MCRI based CSI reporting on PUCCH is applied as shown in section 9.2.5.2 of TS 38.213, Proposals 1 and 2 may be applied. In more detail, the CSI omission may be applied to CSI reporting on a PUCCH by using the CSI priority of proposal 1 above or the CSI omission determination method 1/2/3/4 of Proposal 2 alone or in combination.

Although the above proposal is the invention for MCRI based CSI reporting, Proposals 1/2 above may also be applied to cases in which multiple CSI-RS resources are aggregated to perform single/multiple CSI reporting for a single large aggregated channel (e.g., 32 port CSI-RS + 32 port CSI-RS = 64 port CSI-RS or 32 port CSI-RS * 4 = 128 port CSI-RS).

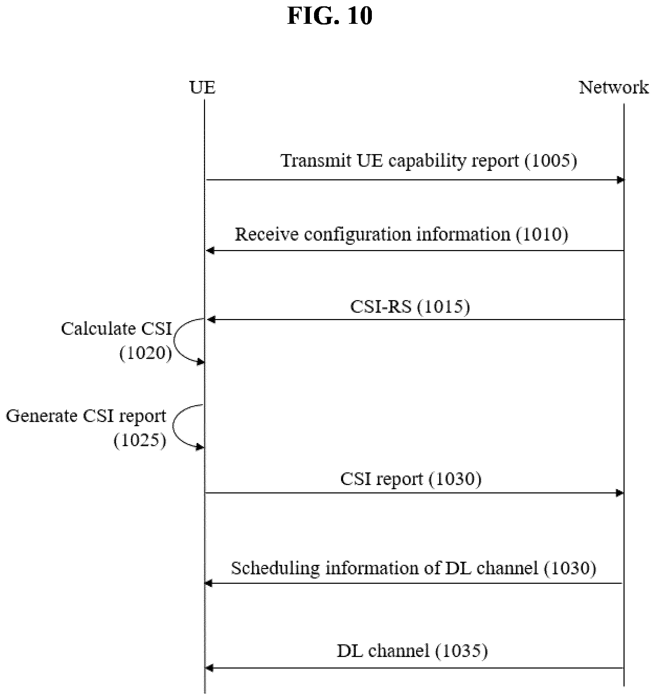

FIG. 10 is a diagram for describing a method of reporting CSI to a network by a UE based on at least a part of Proposal 1/2. Some of operations of the UE/BS illustrated in FIG. 10 may be omitted according to some embodiments.

Referring to FIG. 10, the UE may transmit a UE Capability report (1005). The UE Capability report may include, but is not limited to, at least one of the maximum number of CSI-RS resources supportable by the UE, the number of CSI-RS ports, the total number of CSI-RS ports supportable simultaneously, and/or the number of Rx antenna groups.

The UE may receive configuration information from the BS via higher layer signaling (1010). The configuration information may include configuration information related to CSI-RS transmission and/or CSI reporting.

The BS may transmit CSI-RS to the UE (1015). The UE may measure/predict/calculate CSI based on the CSI-RS (1020).

The BS may generate a CSI report based on the CSI (1025). In this case, the UE may generate a CSI report by performing CSI omission based on configuration information and/or CSI priority.

The UE may transmit the CSI report (1030).

The UE may receive scheduling information of a downlink channel (e.g., PDCCH or PDSCH) from the BS (1035).

The UE may receive a scheduled downlink channel/signal from the BS (1040).

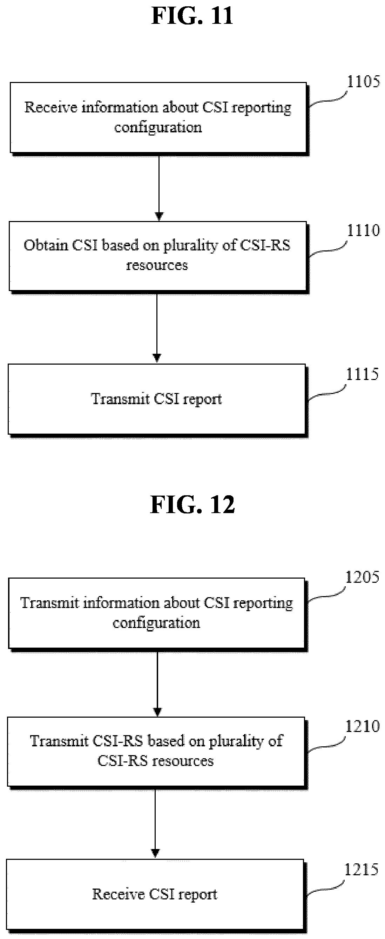

FIG. 11 illustrates a flowchart of a method performed by a UE according to an embodiment.

Referring to FIG. 11, the UE may receive information about channel state information (CSI) reporting configuration through higher layer signaling (1105).

The UE may obtain CSI based on multiple CSI-reference signal (CSI-RS) resources (1110). The obtained CSI may include a plurality of part-2 CSIs associated with the plurality of CRIs.

The UE may transmit a CSI report related to multiple CSI-RS resource indicators (CRIs) based on the CSI (1115). The alignment order of the plurality of part-2 CSIs within the CSI report may be determined based on the plurality of CRIs.

A part of the plurality of Part-2 CSIs may be omitted from the CSI report. The omission priority of each of the plurality of Part-2 CSIs may be determined based on the plurality of CRIs.

From among the plurality of CRIs, Part-2 CSI that is associated with CRI having the lowest priority may have the highest omission priority.

The plurality of part-2 CSIs may be related to a plurality of groups including a first group and a second group. The second group may have a higher omission priority than the first group.

Part-2 CSI that is associated with CRI having the highest priority from among the plurality of CRIs may be included in the CSI report.

A CSI report related to the plurality of CRIs may have the same priority as a CSI report including layer 1-reference signal received power (L1-RSRP) or layer 1-signal to interference plus noise ratio (L1-SINR).

A CSI report related to the plurality of CRIs may have a higher priority than the remaining CSI reports except for the CSI report including layer 1-reference signal received power (L1-RSRP) or layer 1-signal to interference plus noise ratio (L1-SINR).

The CSI report may be transmitted via a physical uplink shared channel (PUSCH).

FIG. 12 illustrates a flowchart of a method performed by a BS according to an embodiment.

Referring to FIG. 12, the UE may transmit information about channel state information (CSI) reporting configuration to the UE through higher layer signaling (1205).

The BS may transmit CSI-RS based on multiple CSI-reference signal (CSI-RS) resources (1210).

The BS may receive a CSI report related to multiple CSI-RS resource indicators (CRIs) from the UE (1215). The CSI report may include a plurality of part-2 CSIs associated with the plurality of CRIs. The alignment order of the plurality of part-2 CSIs within the CSI report may be determined based on the plurality of CRIs.

The alignment order of the plurality of part-2 CSIs may be related to an omission priority of each of the plurality of part-2 CSIs.

From among the plurality of CRIs, Part-2 CSI that is associated with CRI having the lowest priority may have the highest omission priority.

The plurality of part-2 CSIs may be related to a plurality of groups including a first group and a second group. The second group may have a higher omission priority than the first group.

Part-2 CSI that is associated with CRI having the highest priority from among the plurality of CRIs may be included in the CSI report.

A CSI report related to the plurality of CRIs may have the same priority as a CSI report including layer 1-reference signal received power (L1-RSRP) or layer 1-signal to interference plus noise ratio (L1-SINR).

A CSI report related to the plurality of CRIs may have a higher priority than the remaining CSI reports except for the CSI report including layer 1-reference signal received power (L1-RSRP) or layer 1-signal to interference plus noise ratio (L1-SINR).

The CSI report may be received via a physical uplink shared channel (PUSCH).

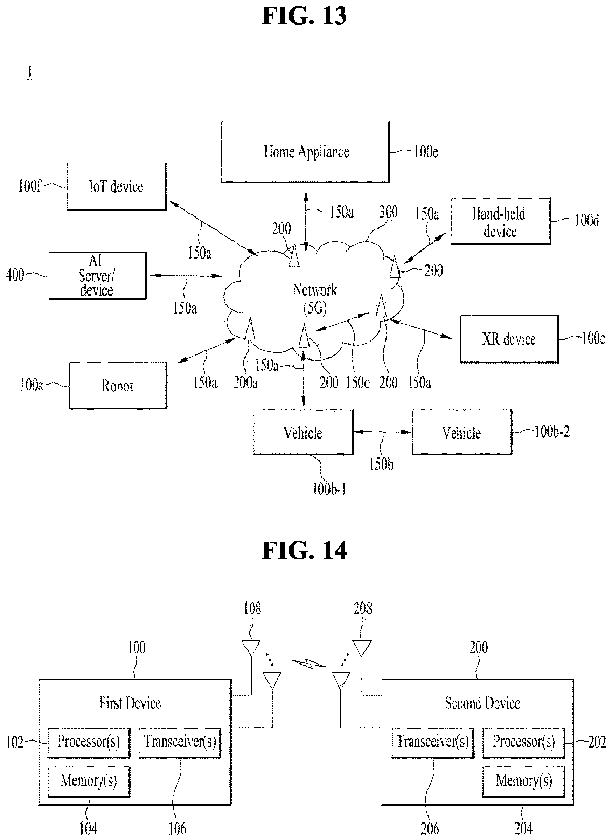

FIG. 13 illustrates a communication system 1 applied to the present disclosure.

Referring to FIG. 13, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.
Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

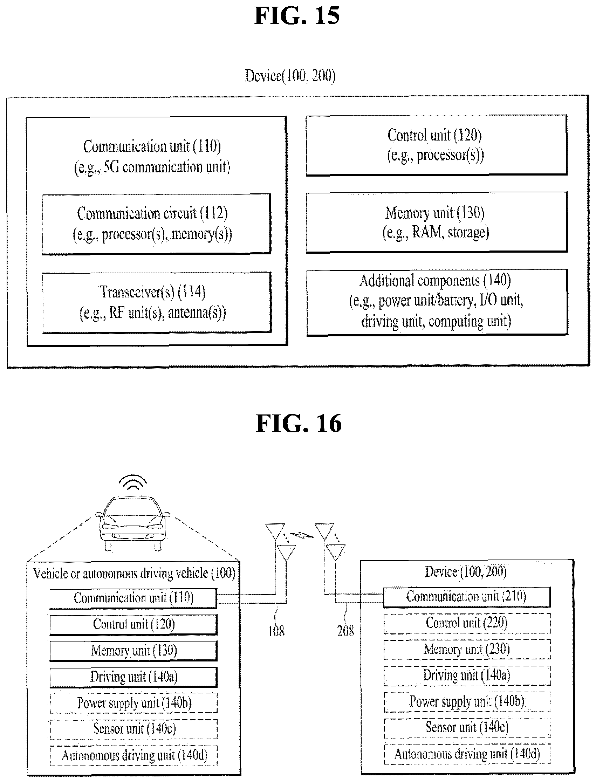

FIG. 15 illustrates another example of a wireless device applied to the present disclosure. The wireless device may be implemented in various forms according to a use-case/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), the method comprising:
receiving information about channel state information (CSI) reporting configuration via higher layer signaling;
obtaining CSI based on a plurality of CSI-reference signal (CSI-RS) resources; and
transmitting a CSI report related to a plurality of CSI-RS resource indicators (CRIs) based on the CSI,
wherein the obtained CSI includes a plurality of part-2 CSIs associated with the plurality of CRIs, and
wherein an alignment order of the plurality of part-2 CSIs within the CSI report is determined based on the plurality of CRIs.

2. The method of claim 1, wherein a part of the plurality of Part-2 CSIs are omitted from the CSI report, and
wherein an omission priority of each of the plurality of Part-2 CSIs is determined based on the plurality of CRIs.

3. The method of claim 2, wherein, from among the plurality of CRIs, Part-2 CSI that is associated with the CRI having a lowest priority, has a highest omission priority.

4. The method of claim 2, wherein the plurality of part-2 CSIs are related to a plurality of groups including a first group and a second group, and
wherein the second group has a higher omission priority than the first group.

5. The method of claim 1, wherein Part-2 CSI that is associated with CRI having a highest priority from among the plurality of CRIs is included in the CSI report.

6. The method of claim 1, wherein a CSI report related to the plurality of CRIs has a same priority as a CSI report including layer 1-reference signal received power (L1-RSRP) or layer 1-signal to interference plus noise ratio (L1-SINR).

7. The method of claim 1, wherein a CSI report related to the plurality of CRIs has a higher priority than remaining CSI reports except for a CSI report including layer 1-reference signal received power (L1-RSRP) or layer 1-signal to interference plus noise ratio (L1-SINR).

8. The method of claim 1, wherein the CSI report is transmitted via a physical uplink shared channel (PUSCH).

9. A non-transitory computer-readable recording medium having recorded thereon a program for performing the method of claim 1.

10. A device comprising:
a memory configured to store instructions; and
a processor configured to perform operations by executing the instructions,
wherein the operations of the processor comprise:
receiving information about channel state information (CSI) reporting configuration via higher layer signaling;
obtaining CSI based on a plurality of CSI-reference signal (CSI-RS) resources; and
transmitting a CSI report related to a plurality of CSI-RS resource indicators (CRIs) based on the CSI,
wherein the obtained CSI includes a plurality of part-2 CSIs associated with the plurality of CRIs, and
wherein an alignment order of the plurality of part-2 CSIs within the CSI report is determined based on the plurality of CRIs.

11. The device of claim 10, further comprising a transceiver,
wherein the device is a user equipment (UE) in a wireless communication system.

12. The device of claim 10, wherein the device is a processing device configured to control a user equipment (UE) in a wireless communication system.

13. A method performed by a base station (BS), the method comprising:
transmitting information about channel state information (CSI) reporting configuration to a user equipment (UE) via higher layer signaling;
transmitting a CSI-reference signal (CSI-RS) based on a plurality of CSI-RS resources; and
receiving a CSI report related to a plurality of CSI-RS resource indicators (CRIs) from the UE,
wherein the CSI report includes a plurality of part-2 CSIs associated with the plurality of CRIs, and
wherein an alignment order of the plurality of part-2 CSIs within the CSI report is determined based on the plurality of CRIs.

14. A non-transitory computer-readable recording medium having recorded thereon a program for performing the method of claim 13.

15. A base station (BS) comprising:
a memory configured to store instructions; and
a processor configured to perform operations by executing the instructions,
wherein the operations of the processor comprise:
transmitting information about channel state information (CSI) reporting configuration to a user equipment (UE) via higher layer signaling;
transmitting a CSI-reference signal (CSI-RS) based on a plurality of CSI-RS resources; and
receiving a CSI report related to a plurality of CSI-RS resource indicators (CRIs) from the UE,
wherein the CSI report includes a plurality of part-2 CSIs associated with the plurality of CRIs, and
wherein an alignment order of the plurality of part-2 CSIs within the CSI report is determined based on the plurality of CRIs.
